# EUROPEAN PATENT APPLICATION

(11) **EP 1 474 996 A1**
(43) Date of publication of application: **10.11.2004**
(21) Application number: 03076410.4
(22) Date of filing: 09.05.2003
(51) Int. Cl.: A23K 1/00, A23K 1/16

(54) **Method for reducing malodours or bad tastes of solid products containing a carboxylic acid**

(71) Applicant: Inve Technologies N.V., 9200 Dendermonde (BE)
(72) Inventor: Schwarzer, Koen, 9200 Dendermonde (BE); Cruz Cavero Buera, José, 22300 Babastro (ES)
(74) Representative: Van Reet, Joseph

(57) **Abstract**

A method is claimed for reducing malodours or bad tastes of solid products containing at least one C₁-C₁₄ mono-carboxylic acid wherein said solid product is made by drying an aqueous solution, dispersion and/or slurry which contains the said carboxylic acid and an amount of one or more proteins, including at least one water-soluble protein. The advantage of intermixing proteins with the carboxylic acid is that the malodour or bad taste of this acid is reduced, even when they do not form a coating around the acid. Moreover, less material is needed when starting from a solution, dispersion and/or slurry and the drying process is less expensive and the organic acid stays more directly physiologically available when used in feed or food compared to a coated organic acid.

## Description

The present invention relates to a method for producing a solid product containing more than 20% by dry weight of at least one organic component selected from the group consisting of C₁-C₁₄ carboxylic acids, in particular mono-carboxylic acids, salts and esters of these carboxylic acids, and mixtures thereof.

The use of organic acids in animal feeds is known for many years (ref 1). Especially young animals can take benefit from their acidifying and bacteriostatic effects. Acids can thus help the initiation of digestion of complex dry feeds: while a reduction of the pH of fed bolus improves the endogenous enzyme activity, the acids' bacteriostatic effect reduces intestinal colonisation by pathogenic micro-organisms.

The most frequently used organic acids in feed are the carboxylic acids, the C₁-C₁₄ mono-carboxylic acids being the most important ones. The C₁-C₆ carboxylic acids are characterised in that they are more volatile acids. Evidence is provided that dietary supplemented butyric acid (C₄), besides the effects mentioned above, also beneficially acts on gut morphology in that it increases the repair of the villi on the intestinal mucosa in poultry, pigs and other animal species (ref 2, ref 3).

A drawback of the dietary supplementation of especially the C₁-C₆ carboxylic acids, and more in particular of butyric acid (either in its acid form or in the form of a butyrate salt) is the odour of this ingredient. Butyrate sends forth a typical, strong and unpleasant smell.

The odour of butyrate does not pose a problem for the animals consuming the feed in which butyrate is included (as no difference in feed intake pattern was observed with or without the addition of butyrate). However, for the people who work at a production unit of butyrate or at a feed plant that is processing the butyrate as a feed ingredient, the smell of the butyrate forms a major problem. The odour is not only irritating, but when butyrate comes in direct contact with the skin, the skin 'absorbs' this odour and this unpleasant smell can not be cleared away by rinsing with plenty of water or washing with soap. The odour of butyrate stays on for several days more after being in direct contact with the product.

A consequence of this odour problem is that it is very hard to find employees willing to handle butyrate on the production floor. Also some feed plants refuse to include butyrate in their feed ingredient stock simply and solely because of the odour.

In contrast to the lower carboxylic acids, the longer carboxylic acids, especially the C₇-C₁₄ carboxylic acids, does not have a bad odour but a drawback of the dietary supplementation of these carboxylic acids is their unpleasant taste, so that they disturb the feed intake of animals consuming these compounds. Therefore, some flavouring or aromatic compounds are often added in the feed these components are fed to the animals to mask the bad taste of the C₇-C₁₄ carboxylic acids. However, those flavouring or aromatic compounds are often expensive and do not always mask the bad taste caused by the C₇-C₁₄ carboxylic acids entirely.

In the patent literature, in particular in US-A-5 008 118, there are already described methods for masking the odour or taste of organic acids, like butyric acid and butyrates which are used in food or feed additives. In the method disclosed in US-A-5 008 118 the organic acid or salt is coated, in the form of a core powder, with a lipid. Optionally, the core powder may first be pre-coated with a water-soluble component, an oily component or a high polymeric component. The water-soluble component is selected from the group consisting of sugar, proteins, inorganic salts and mixtures thereof. Pre-coating is effected either by suspending the core powder in the melted coating component or by spraying the coating component onto the core powder in the fluidised state.

When applying the method disclosed in US-A-5 008 118 for coating core powders based on C₁-C₆ carboxylic acids or carboxylates, and in particular for core powders comprising a butyrate such as sodium butyrate, a drawback of the disclosed coating method is that when the butyrate comes in direct contact with the skin, the problem of the long-lasting smell still remains. Moreover, for coating a powder, a relatively large amount of coating agent is required to reduce the bad smell and/or the bad taste. In this respect, an object of the invention disclosed in US-A-5 008 118 is to enable to coat a larger amount of coating agent compared to the prior coating methods. The coating method thus does not only increase the cost price of the product but the content of active substance in the product is moreover considerably reduced. The coated butyrate products which are presently on the market comprise for example only 30 to 40% by weight of the active organic component.

An object of the present invention is therefore to provide a new method which enables to produce a solid product containing a C₁-C₁₄ carboxylic acid, a salt and/or an ester thereof which does not require a large amount of coating agent to reduce or to avoid the malodour and/or bad taste of this active component and/or a long-lasting smell when the active substance comes in direct contact with the skin.

To this end, the method according to the invention is characterised in that the solid product is made by drying an aqueous solution, dispersion and/or slurry which contains said organic component and an amount of one or more proteins, including at least one water-soluble protein.

In the present specification the expression "dispersion" is used to indicate a substantially homogenous suspension of a solid material in a liquid, or also a substantially homogenous emulsion of a liquid in a liquid, whilst the expression "slurry" is used to indicate a liquid wherein a solid material is not homogeneously suspended or a liquid containing a suspended solid material which will settle if not agitated continuously.

According to the invention it has been found that proteins, intermixed with the active organic component, are able to reduce the malodour or bad taste of the organic component, even when they do not form a coating around the organic component. Moreover, when starting from an aqueous solution, dispersion and/or slurry of the active organic component and the proteins so that the organic component is not coated with the proteins but intermixed therewith, less material is needed to achieve a predetermined reduction of the malodour, bad taste and/or long-lasting smell, which arises when the organic component comes into contact with the skin. A further advantage is that a drying process is less expensive than a coating process and that the organic component stays more directly available (physiologically) when used in feed or food compared with a coated organic component.

In a preferred embodiment of the method according to the invention, use is made for making said aqueous solution, dispersion and/or slurry of partially hydrolysed wheat gluten, partially hydrolysed soybean protein, egg albumin, and/or lactic casein, preference being given to the use of partially hydrolysed wheat gluten and/or partially hydrolysed soybean protein.

Experiments have shown that these protein products, which all contain water-soluble proteins either naturally or after a chemical or enzymatic partial hydrolysation, are quite effective for reducing the smell or taste of the organic component in the method according to the invention.

In a further preferred embodiment of the method according to the invention, the organic component is, in a pure form, a solid and it comprises in particular a carboxylic acid salt.

This embodiment offers two advantages. First, due to the fact that the organic component is a solid, and in particular a carboxylate, the smell or taste thereof is already considerably reduced compared to the smell of the corresponding acid. This goes especially for the smell of the lower C₁-C₆ carboxylic acids. Further, a smaller amount of further solid materials is needed to enable to achieve a solid product after the drying step. In other words, the solid product may contain a larger amount of the active organic component.

Other particularities and advantages of the invention will become apparent from the following more detailed description of some particular embodiments of the method and the solid product according to the present invention.

In the method according to the invention a solid product is made containing as active organic component a C₁-C₁₄ carboxylic acid, a salt of a C₁-C₁₄ carboxylic acid, an ester of a C₁-C₁₄ carboxylic acid, and/or a mixture of these substances. The carboxylic acid is more particularly a mono-carboxylic acid. Possible lower carboxylic acids are formic acid, acetic acid, propionic acid, lactic acid, butyric acid (n-butyric acid or iso-butyric acid), 2-methylbutyric acid, n-valeric acid, iso-valeric acid and tert. valeric acid. From these acids, butyric acid is the most important but has also one of the most bad smells. The salts of the carboxylic acids include for example sodium, potassium, calcium, magnesium, iron, copper, or zinc salts. The esters of the carboxylic acids are for example methyl, ethyl or propyl esters. Middle large carboxylic acids are for example caproic acid, enantic acid, caprylic acid, capric acid, lauric acid and their salts and esters. These acids are normally saturated linear acids.

In order to reduce the smell and/or taste of these active organic components, use is made in the method according to the invention of one or more proteins including at least one water-soluble protein. As protein or proteins use can be made of different kinds of natural proteins including cereal proteins (from barley, wheat, corn, rice, ...), leguminous proteins (from bean, pea, lupine, ...), proteins from tuberous plants and roots (from potato, ...), proteins from oil seeds (from soybean, ...), fish proteins, milk proteins, egg proteins, blood proteins, meat and bone proteins, hoof and horn proteins and feather proteins, and further of partial hydrolysates of these proteins. When these proteins are not water-soluble, they can be hydrolysed partially, more particularly to such an extend that they become at least partially water-soluble. For reducing the smell and/or bad taste of the active organic components, including the smell which remains after contact with the skin, egg albumin and lactic casein appeared to be quite effective whilst partially hydrolysed wheat gluten and partially hydrolysed (enzyme modified) soybean protein appeared to be even more effective.

In the method according to the invention the solid product containing the above described active organic component is made by drying an aqueous solution, dispersion and/or slurry containing at least the organic component and an amount of the above described protein or proteins, including at least one water-soluble protein, until a solid product is obtained. In this solid product, the active organic component is therefore not coated with these proteins but it is intermixed therewith and this preferably in a substantially homogenous way. For drying the aqueous solution, dispersion and/or slurry, different techniques can be used including spray-drying, vacuum drying, freeze-drying (lyophilisation), oven drying, air drying, etc. The aqueous solution, dispersion and/or slurry is preferably dried to a water content of at the most 15% by weight, more preferably to a water content of at the most 12% by weight and most preferably to a water content of at the most 8% by weight.

For preparing the aqueous solution, dispersion and/or slurry containing the active organic component, this organic component can be either added as such or reagents can be added which react in the aqueous solution, dispersion and/or slurry to produce the active organic component. As an example, in order to achieve sodium butyrate as active organic component in the aqueous solution, dispersion and/or slurry it is first of all possible to dissolve this sodium butyrate in the aqueous solution, dispersion and/or slurry. On the other hand, it is also possible to mix liquid butyric acid and sodium hydroxide in the aqueous solution, dispersion and/or slurry before drying it so that they can react to produce sodium butyrate. It is even possible to form the aqueous solution, dispersion and/or slurry during or just before the drying process itself, in particular during or just before the spray-drying process. A first stream containing the butyric acid and the proteins and a second stream containing a sodium hydroxide solution can for example be brought together just before being let to the spray nozzles or both streams can possibly even be sprayed through separate nozzles in to the drying column or tower so that the required reactions to produce sodium butyrate occur during the actual drying step itself. An advantage of this latter embodiment is that, when the active organic component is not or only slightly water-soluble, water-soluble or miscible reagents can be used (for example calcium hydroxide) to prepare both aqueous streams, the active organic component being only produced during or just before the drying process so that it does not have to be kept in suspension.

In a further alternative embodiment, when a solid reagent is used, this solid reagent can be spread onto a support, in particular onto a conveyor belt, and the other liquid reagent stream or streams can be sprayed onto the solid reagent. The liquid reagent stream or streams contain such an amount of water that, together with any water produced during the reaction, a solution, suspension or slurry is formed. This solution, suspension or slurry can be dried by the heat produced during the exothermic reaction and/or by external heat. The solid reagent spread on the support may for example be calcium hydroxide powder onto which butyric acid and a protein solution or dispersion is sprayed.

The aqueous solution, dispersion and/or slurry is preferably composed to contain, per mole of the active organic component, at least 1 g, preferably at least 5 g and more preferably at least 10 g of the protein or proteins. A higher amount of proteins enables to achieve a better reduction of the malodour or taste of the active ingredient. However, in view of avoiding too much ballast material in the solid product, use is preferably made of at the most 50 g, more preferably of at the most 35 g and most preferably of at the most 25 g of the protein or proteins, per mole of the active organic component.

When subjecting the aqueous solution, dispersion and/or slurry to the drying step, it is preferably kept in a homogeneous state, i.e. any settling of solids or separation of different phases is preferably prevented so that the proteins are homogeneously mixed with the active organic component when being dried. To achieve this, the aqueous solution, dispersion and/or slurry is preferably a solution which is substantially free of suspended solids or a dispersion which contains only a small amount of suspended solids and which does not need continuous agitation to keep the solids in suspension. A further advantage of dissolved substances is that the proteins and the active organic component can also interact better with one another to form the physical and/or chemical bonds which are required to reduce the malodour or the bad taste of the organic component. To avoid or reduce the amount of suspended solids, and to enable a better interaction with the active organic component to form the physical and/or chemical bonds which are required to reduce the malodour or the bad taste of the organic component, at least a portion of the protein or proteins are water-soluble. Preferably, the aqueous solution, dispersion and/or slurry is composed to contain, per mole of the organic component, at least 0.5 g, preferably at least 3 g and more preferably at least 6 g of water-soluble proteins in a dissolved state.

In its pure form, the active organic component is preferably a solid, for example a carboxylate such as a butyrate. An advantage of a solid organic component is that no additives are required to enable to produce the final solid product so that this product may show a larger content of the active organic component. In this respect, the aqueous solution, dispersion and/or slurry is preferably composed so that at least 25% by weight, preferably at least 50% by weight, more preferably at least 65% and most preferably at least 75% of its dry matter content is formed by said organic component. In this way, when no further additives or coatings are applied to the dried solid product, this product has a larger content of the active organic component than the solid products which are presently on the market. The method according to the present invention however does not exclude any further processing of the obtained powdery solid product. The powdery product can for example be processed into tablets or granules (with or without the addition of other products). Optionally, the product can further be coated.

In order to provide the proteins in the aqueous solution, dispersion and/or slurry, use can be made of a protein product or a mixture of protein products which contain, in addition to proteins, further substances. This protein product or mixture of protein products contain preferably at least 30% by weight, more preferably at least 50% by weight and more preferably at least 65% by weight of said protein or proteins. By using a protein product or protein source which has a higher protein content, it is possible to achieve a final solid product having a higher content of the active organic component.

Instead of using an active organic component which is solid in its pure form, it is also possible to use an active organic component which is liquid in its pure state, for example butyric acid or lower alkyl esters (C₁-C₄) thereof. In order to enable to achieve a solid product after drying, enough other solids should be included in the aqueous solution, dispersion and/or slurry. These solids include first of all the proteins, including the water-soluble proteins. Moreover, in addition to the proteins one or more carriers, i.e. fillers, can be added to the aqueous solution, dispersion and/or slurry.

When use is made of a protein product or protein source containing, in addition to the protein or proteins, further solid substances, these further solid substances form a carrier material which also contributes in achieving a solid product. In this respect, protein sources having a lower protein content may be very suitable for use in combination with a liquid active organic component. Instead of lactic casein, it may for example be preferred to use whey containing, in addition to the water-soluble milk proteins, a considerable amount of lactose and further a smaller amount of minerals. On the other hand separate carrier materials can be added, for example maltodextrines, dextrose, gums, salts....

### Examples

In the following examples the odour reduction was evaluated as follows:
- by the smell of the product as such
- by the smell of the product after applying a small amount of the product on the skin, wetting it, rubbing it during 30 seconds and then cleaning the skin with water.
Large odour reduction is corresponding with +++
Medium odour reduction is corresponding with ++
Small odour reduction is corresponding with +

**Table 1:**

| overview of the effect of some protein sources on the odour reduction as determined in Examples 1-4. | | |
|---|---|---|
| **Protein source** | **Dosage applied** **(% of end-product on dry matter)** | **Odour reduction** |
| Hydrolysed wheat gluten | 15 | +++ |
| Enzyme modified soybean protein | 15 | ++ |
| Egg albumin | 15 | + |
| Lactic casein | 15 | + |

### Example 1

Hydrolysed wheat gluten:
characterised by:
· Protein content on dry matter: minimum 76%
· Soluble protein content on total protein content: ± 70%
Process: natural protein derived from wheat obtained by wet milling and hydrolysed enzymatically.

13.5 g of hydrolysed wheat gluten were placed in a 400 ml beaker and 133.5 g of demineralized water and 153 g of a 50 % w/w sodium butyrate aqueous solution were added. During 10 minutes, the solution was mechanically stirred to approximately 300 rpm (using a HEIDOLPH RZR-1 stirrer and a helical stir bar). Afterwards and due to the rest of agglomerates that dissolved slower, the dispersion was stirred during approximately 5 minutes to 8000 rpm (with a dispersor IKA ULTRA-TURRAX T25 basic with dispersing tool S25NK19G). A cream coloured solution was obtained with some matter in suspension but homogenous.

Next, drying this suspension (keeping it with constant agitation) occurred by pumping it with a built-in peristaltic pump (20 % of the capacity of the pump) to a Mini Spray Dryer BÜCHI B-191, previously switched on with the processing patterns. The air inlet temperature was 170 °C, the aspiration power was 80 % and the air flow for the nozzle was 600 litres/hour at 6 bar pressure (with an interval of 4 for the pulverisation nozzle cleaner). The outlet air temperature was kept during all the process at approximately 95 °C.

A fine white-cream coloured product of non-disagreeable smell and acid-milky aroma with a touch of cereal aroma was obtained. The smell of butyrate was largely reduced There was no or very little butyric odour noticed on the final product. In contact with the skin the odour of butyric acid disappeared after rinsing with water or washing with soap.

### Example 2

Enzyme modified soybean protein:
characterised by:
· Protein content on dry matter: minimum 75%
· Soluble protein content on total protein content: At least 50%
Process: natural protein derived from soy protein by carefully controlled enzymatic hydrolysis.

13.5 g of enzyme modified soy protein were placed in a 400 ml beaker and 133.5 g of demineralised water and 153 g of a 50% w/w sodium butyrate aqueous solution were added. During 10 minutes, the suspension was agitated mechanically and an ultrasonic bath was used for approximately 5 minutes so that a cream-coloured suspension was obtained.

Next, drying this suspension (keeping it with constant agitation) occurred by pumping it with a built-in peristaltic pump (20 % of the capacity of the pump) to a Mini Spray Dryer BÜCHI B-191, previously switched on with the processing patterns. The same operation conditions were used as described in Example 1. A fine white lightly cream-coloured product was obtained and its smell of butyrate was mainly reduced. There was very little of a butyric odour on the final product. In contact with the skin the odour of butyric acid disappeared after rinsing with water or washing with soap.

### Example 3

Egg albumin:
characterised by:
· Protein content on dry matter: minimum 80%
· Soluble protein content on total protein content: at least 90%
Process:

13.5 g of egg albumin were placed in a 400 ml beaker and 13.,5 g of demineralised water and 153 g of a 50% w/w Sodium Butyrate aqueous solution were added. During 15 minutes, the suspension was agitated mechanically at 35-40°C in order to obtain faster a suspension. A yellow-coloured suspension was obtained.

Next, drying this suspension (keeping it with constant agitation) occurred by pumping it with a built-in peristaltic pump (20 % of the capacity of the pump) to a Mini Spray Dryer BÜCHI B-191, previously switched on with the processing patterns. The same operation conditions were used as described in Example 1. A fine white powder was obtained. The smell of butyric was moderately reduced. There was some butyric odour on the final product. In contact with the skin the odour of butyric acid disappeared after rinsing with water and washing with soap.

### Example 4:

Lactic casein:
characterised by:
· Protein content on dry matter: 86%
· Soluble protein content on total protein content: at least 60%
Process: it is made by adding microbial cultures to milk to convert lactose to lactic acid, lowering the pH and precipitating the casein by heating.

13.5 g of lactic casein were placed in a 400 ml beaker and 133.5 g of demineralised water and 153 g of a 50% w/w Sodium Butyrate aqueous solution were added. While stirring, the solution was stabilized by adding NaOH 1 N to get a pH of 13.0. A slightly white-opalescent suspension was obtained.

Next, drying this suspension (keeping it with constant agitation) occurred by pumping it with a built-in peristaltic pump (20 % of the capacity of the pump) to a Mini Spray Dryer BÜCHI B-191, previously switched on with the processing patterns. The same operation conditions were used as described in Example 1. A fine white powder was obtained. The smell of butyric was moderately reduced. There was some butyric odour on the final product. In contact with the skin the odour of butyric acid disappeared after rinsing with water and washing with soap.

### References

Ref. 1: Galfi, P., Neoprady, S. (1995). Acides organiques monocarboxyliques (2-6 carbones) dans la nutrition des porcs et autres espèces. Symposium International: Alimentation Animale et Santé Publique, Additifs sans Résidu. « Probiotiques - Prébiotiques - Parabiotiques » - 17-18 mai 1995, 16 pp.
Ref. 2: Pluske et al. (2001). Morphological and functional changes in the small intestine of the newly-weaned pig. In : Gut Environment of Pigs, Nottingham University Press, UK, 1 -27.
Ref. 3: Andoh, A., Bamba, T., Sasaki, M. (1999). Physiological and antiinflammatory roles of dietary fiber and butyrate in intestinal functions. Journal of Parenteral and enteral nutrition 23: S70-S73.

## Claims

1. A method for producing a solid product containing more than 20% by dry weight of at least one organic component selected from the group consisting of C₁-C₁₄ carboxylic acids, in particular mono-carboxylic acids, salts and esters of these carboxylic acids, and mixtures thereof, **characterised in that** said solid product is made by drying an aqueous solution, dispersion and/or slurry which contains said organic component and an amount of one or more proteins, including at least one water-soluble protein.

2. A method according to claim 1, **characterised in that** said proteins comprise at least one protein selected from the group consisting of cereal proteins, leguminous proteins, proteins from tuberous plants and roots, proteins from oil seeds, fish proteins, milk proteins, egg proteins, blood proteins, meat and bone proteins, hoof and horn proteins and feather proteins, and further of partial hydrolysates of these proteins.

3. A method according to claim 1 or 2, **characterised in that** for making said aqueous solution, dispersion and/or slurry, use is made of partially hydrolysed wheat gluten, partially hydrolysed soybean protein, egg albumin, and/or lactic casein, preference being given to the use of partially hydrolysed wheat gluten and/or partially hydrolysed soybean protein.

4. A method according to any one of the claims 1 to 3, **characterised in that** said aqueous solution, dispersion and/or slurry is composed to contain, per mole of said organic component, at least 1 g, preferably at least 5 g and more preferably at least 10 g of said one or more proteins.

5. A method according to any one of the claims 1 to 4, **characterised in that** said aqueous solution, dispersion and/or slurry is composed to contain, per mole of said organic component, at the most 50 g, preferably at the most 35 g and more preferably at the most 25 g of said one or more proteins.

6. A method according to any one of the claims 1 to 5, **characterised in that** said aqueous solution, dispersion and/or slurry is composed to contain, per mole of said organic component, at least 0.5 g, preferably at least 3 g and more preferably at least 6 g of said water-soluble protein in a dissolved state.

7. A method according to any one of the claims 1 to 6, **characterised in that**, in pure form, said organic component is a liquid, said organic component comprising in particular a carboxylic acid and/or an ester thereof, the organic component comprising preferably a carboxylic acid.

8. A method according to claim 7, **characterised in that** said aqueous solution, dispersion and/or slurry is composed to contain, in addition to said organic component and said one or more proteins, at least one carrier for the liquid organic component.

9. A method according to any one of the claims 1 to 6, **characterised in that**, in a pure form, said organic component is a solid, said organic component comprising in particular a carboxylic acid salt.

10. A method according to any one of the claims 1 to 9, **characterised in that** said aqueous solution, dispersion and/or slurry is composed to have a predetermined dry matter content, at least 25% by weight, preferably at least 50% by weight, more preferably at least 65% by weight and most preferably at least 75% by weight of which is formed by said organic component.

11. A method according to any one of the claims 1 to 10, **characterised in that** for providing said one or more proteins in said aqueous solution, dispersion and/or slurry, use is made of a protein product, or a mixture of protein products, which contains at least 30% by weight, preferably at least 50% by weight and more preferably at least 65% by weight of said one or more proteins.

12. A method according to any one of the claims 1 to 11, **characterised in that** said aqueous solution, dispersion and/or slurry is dried to a water content of at the most 15%, preferably to a water content of at the most 12% and more preferably to a water content of at the most 8% by weight.

13. A method according to any one of the claims 1 to 12, **characterised in that** said organic component comprises butyric acid or a salt or an ester thereof, the organic component preferably comprises a salt of butyric acid, in particular a sodium, potassium, calcium, magnesium, iron, copper, or zinc salt.

14. A method according to any one of the claims 1 to 12, **characterised in that** said organic component is selected from the group consisting of C₁-C₆ carboxylic acids, salts and esters of these carboxylic acids and mixtures thereof.

15. A solid product containing at least one organic component selected from the group consisting of C₁ ― C₁₄ carboxylic acids, in particular mono-carboxylic acids, salts and esters of these carboxylic acids, and mixtures thereof, **characterised in that** it is obtainable by a method according to any one of the claims 1 to 14 and contains said organic component intermixed with an amount of one or more proteins, including at least one water-soluble protein, the organic component being preferably intermixed substantially homogeneously with said proteins.
